# EUROPÄISCHE PATENTSCHRIFT

(11) **EP 2 186 189 B1**
(45) Veröffentlichungstag und Bekanntmachung des Hinweises auf die Patenterteilung: **02.01.2019**
(21) Anmeldenummer: 08774823.2
(22) Anmeldetag: 07.07.2008
(51) Int. Cl.: H02P 25/18

(54) **ELEKTRISCHE MASCHINE**
ELECTRICAL MACHINE
MACHINE ÉLECTRIQUE

(30) Priorität: 29.08.2007 DE 102007040725
(43) Veröffentlichungstag der Anmeldung: 19.05.2010
(73) Patentinhaber: Robert Bosch GmbH, 70442 Stuttgart (DE)
(72) Erfinder: BOSCH, Volker, 70771 Echterdingen (DE); REUTLINGER, Kurt, 70174 Stuttgart (DE)
(86) Internationale Anmeldenummer: PCT/EP2008/058749
(87) Internationale Veröffentlichungsnummer: WO 2009/030542

(56) Entgegenhaltungen:
- EP-A1- 0 181 938
- EP-A1- 0 346 488
- WO-A1-2006/004495
- WO-A2-2004/022944
- DE-A1- 10 117 333
- DE-A1- 19 917 419
- US-A- 3 016 482

## Beschreibung

### Stand der Technik

Die Erfindung geht aus von einer elektrischen Maschine nach der Gattung des unabhängigen Anspruchs.

Aus der DE 10 2004 027 635 A1 ist eine derartige elektrische Maschine als Antrieb eines handgeführten oder stationären Elektrowerkzeuges bekannt, deren Antriebseinheit einen elektronisch kommutierbaren Motor mit einem permanentmagnetisch erregten Rotor aufweist und deren Stator mittels einer Motorsteuerung derart betrieben wird, dass der Motor in einem ersten Drehzahlbereich in einem spannungsgesteuerten Betrieb arbeitet und in einem zweiten Drehzahlbereich, der sich an den ersten Drehzahlbereich in Richtung einer höheren Drehzahl anschließt, gemäß einem Feldschwächbetrieb angesteuert wird. Die Feldschwächung wird hierbei erreicht durch eine Phasenverschiebung zwischen der Rotordurchflutung und der Statordurchflutung, wobei eine vorauseilende Kommutierung des Statorstromes erfolgt. Ein derartiger Betrieb, bei dem im Drehzahlbereich der Feldschwächung der Erregerstrom des Stators der Polradspannung vorauseilt, ist mit verhältnismäßig einfachen Mitteln preiswert realisierbar und kann eingesetzt werden, wenn an die Führung der elektrischen Maschine keine hohen Ansprüche gestellt und insbesondere auf die hochdynamische Einstellung des das Drehmoment bildenden Querachsenstromes verzichtet werden kann.

Grundsätzlich wird die Leerlaufdrehzahl von elektronisch kommutierten (EC) Motoren durch die Auslegung der Wicklung und die Höhe der Spannung der speisenden Gleichstromquelle festgelegt. Bei konstanter speisender Spannung ist somit auch die maximale Drehzahl, beziehungsweise die Leerlaufdrehzahl des Motors festgelegt. Um die Drehzahl des Motors weiter zu erhöhen ist eine Feldschwächung erforderlich, wobei der Betrag des mit der Statorwicklung verketteten magnetischen Flusses reduziert wird. Hierzu ist es bekannt, die Feldschwächung durch eine Stator-Stromkomponenete zu erzielen, die in der Statorwicklung eine Durchflutung parallel zur Erregerdurchflutung erzeugt. In der Literatur wird diese Komponente, bezogen auf Rotorhauptachse, als Längs- oder d-Achsenstrom bezeichnet. Diese d-Achsenkomponente ist in der Regel so orientiert, dass sie der Erregerdurchflutung entgegengesetzt ist, wodurch die resultierende Erregerdurchflutung in der Erregerhauptachse vermindert wird.

Die resultierende d-Achsen-Durchflutung induziert in der Ankerwicklung der Maschine eine Spannung, welche der Durchflutung um 90° vorauseilt. Diese induzierte Spannung ist in Phase mit einem Strom, der eine Ankerdurchflutung in der Rotorquer(q)-Achse erzeugt und mit diesem elektrische Leistung in mechanische Leistung umsetzt. Auf dieser Basis ist eine Feldschwächung oder feldorientierte Regelung möglich, bei der die beiden Stator-Stromkomponenten unabhängig voneinander eingestellt werden können. Mit dem q-Achsenstrom erfolgt die Einstellung des Drehmoments, mit dem d-Achsenstrom kann die induzierte Spannung in der Maschine soweit vermindert werden, dass Drehahlen weit über der natürlichen Leerlaufdrehzahl der Maschine erreichbar sind. Eine derartige Regelung ist beispielsweise in der DE 197 25 136 C2 beschrieben.

Aus der DE 10117 333 A1, der WO 2006/004495 A1 und der DE 199 17 419 A1 sind weitere elektrische Maschinen mit einem permanentmagnetisch erregten Rotor und einem eine mehrphasige Statorwicklung tragenden Stator bekannt, welche einerseits in einem spannungsgesteuerten, niedrigeren Drehzahlbereich über einen Umrichter an einer Gleichspannungsquelle und andererseits durch Feldschwächung in einem höheren Drehzahlbereich betreibbar ist. Dabei ist zur Feldsschwächung die jeweilige Struktur der Maschinen veränderbar im Sinne einer Reduzierung der Flussverkettung zwischen dem Rotor und dem Stator.

### Offenbarung der Erfindung

Dadurch, dass zumindest Teile der Statorwicklung mit parallelen Drähten ausgeführt sind, welche jeweils in einer gleichen Nut des Stators liegen und zwischen einer Reihenschaltung für den spannungsgesteuerten Betrieb und einer Parallelschaltung für den Feldschwächbetrieb umschaltbar sind, hat die erfindungsgemäße elektrische Maschine gegenüber dem geschilderten Stand der Technik den Vorteil, dass durch die Parallelschaltung anstelle der Reihenschaltung gleichzeitig mit der Drehzahlerhöhung eine Reduzierung der Kupferverluste der Maschine erreicht wird. Von Vorteil ist es dabei auch, dass der Feldschwächbetrieb und die hierdurch ermöglichte Drehzahlerhöhung der Maschine ohne zusätzliche Statorströme und somit ohne Erhöhung der Verluste in der elektrischen Maschine erreicht werden.

Durch die in den abhängigen Ansprüchen aufgeführten Maßnahmen sind vorteilhafte Weiterbildungen und Verbesserungen der in den unabhängigen Ansprüchen angegebenen elektrischen Maschine möglich.

Vorzugsweise wird die Statorwicklung der erfindungsgemäßen elektrischen Maschine in jeder Phase mit zwei Teilspulen ausgeführt, welche umschaltbar oder abschaltbar sind. Eine derartige Anordnung hat insbesondere hinsichtlich des Aufwandes für die Schaltvorrichtung Vorteile, welche so mit einer geringen Anzahl von Schaltkontakten oder Schaltelementen preiswert gestaltet werden kann. Vorzugsweise ist die Schaltvorrichtung hierbei als mehrpolige Baueinheit ausgeführt.

Hinsichtlich des elektromechanischen Aufbaus der erfindungsgemäßen Maschine ist es vorteilhaft, wenn diese zweiphasig bis sechsphasig ausgebildet ist und der Rotor zweipolig, vierpolig oder mit einem Vielfachen dieser Polzahl ausgeführt wird. Eine einphasige Ausführung wäre nur mit zusätzlichen, insbesondere kapazitiven Bauteilen realisierbar, wobei die Erzeugung eines Drehfeldes jedoch nur hinsichtlich einer einzigen Drehzahl optimiert werden könnte, so dass der Forderung nach einem weiten Drehzahlbereich mit einer derartigen Ausführung nicht Rechnung getragen werden kann. Andererseits ist einer Ausführung der Maschine mit mehr als sechs Phasen insbesondere fertigungstechnisch schwieriger zu realisieren und erfordert einen deutlich höheren Aufwand, insbesondere bezüglich des benötigten Umrichters und der Umschaltvorrichtung, ohne dass entsprechend große Vorteile hinsichtlich der Reduzierung der magnetischen und der Luftspalt-Geräusche erzielt werden. Die zweipolige, vierpolige oder mit einem Vielfachen dieser Polzahl ausgeführte Gestaltung der Maschine hat den Vorteil, dass sich praktisch alle technisch und wirtschaftlich interessanten Gestaltungen insbesondere der Statorwicklung durch einfache Wiederholung und Vervielfachen der Bauform am Umfang des Stators gegenüber einer zweipoligen oder vierpoligen Maschine realisieren lassen.

Weitere Einzelheiten und vorteilhafte Ausgestaltungen der Erfindung ergeben sich aus den Patentansprüchen und aus der Beschreibung der Ausführungsbeispiele.

### Kurze Beschreibung der Zeichnungen

Ausführungsbeispiele der Erfindung sind in den Zeichnungen dargestellt und in der nachfolgenden Beschreibung näher erläutert.

Es zeigen:
- Figur 1: eine schaltungsmäßige Darstellung einer elektrischen Maschine gemäß dem Stand der Technik in der Ausführung eines aus einem Gleichspannungsnetz über einen Umrichter gespeisten EC-Motors mit einer dreiphasigen Statorwicklung mit abschaltbaren Teilspulen,
- Figur 2: eine elektrische Maschine nach dem Stand der Technik entsprechend Figur 1 mit wahlweise in Reihen- oder Parallelschaltung betreibbaren Teilspulen,
- Figur 3: eine elektrische Maschine nach dem Stand der Technik entsprechend Figur 1, deren Teilspulen wahlweise in Reihenschaltung mit dem Umrichter verbindbar oder ohne Sternpunkt-verschiebung teilweise abschaltbar sind,
- Figur 4: eine erfindungsgemäße elektrische Maschine, wobei die Teilspulen der Statorwicklung mit parallelen Drähten gewickelt und wahlweise in Reihen- oder Parallelschaltung betreibbar sind,
- Figur 5: ein Ausführungsbeispiel einer erfindungsgemäßen Statorwicklung einer vierpoligen elektrischen Maschine mit drei Phasen in 12 Nuten mit herausgeführten Anfängen und Enden der Teilspulen,
- Figur 6: ein Ausführungsbeispiel einer erfindungsgemäßen Statorwicklung einer zweipoligen elektrischen Maschine mit drei Phasen in 12 Nuten, ebenfalls mit herausgeführten Spulenanfängen und Spulenenden,
- Figur 7: ein Ausführungsbeispiel einer erfindungsgemäßen Statorwicklung einer zweipoligen elektrischen Maschine mit drei Phasen in 12 Nuten mit herausgeführten Wicklungsanfängen und Wicklungsenden der Teilspulen, wobei die Spulen mit einer Spulenweite von 180°el ausgeführt sind, und
- Figur 8: ein Ausführungsbeispiel einer erfindungsgemäßen Statorwicklung einer vierpoligen elektrischen Maschine mit drei Phasen in 12 Nuten, wobei die Teilspulen mit zwei parallelen Drähten gewickelt sind.

### Ausführungsformen der Erfindung

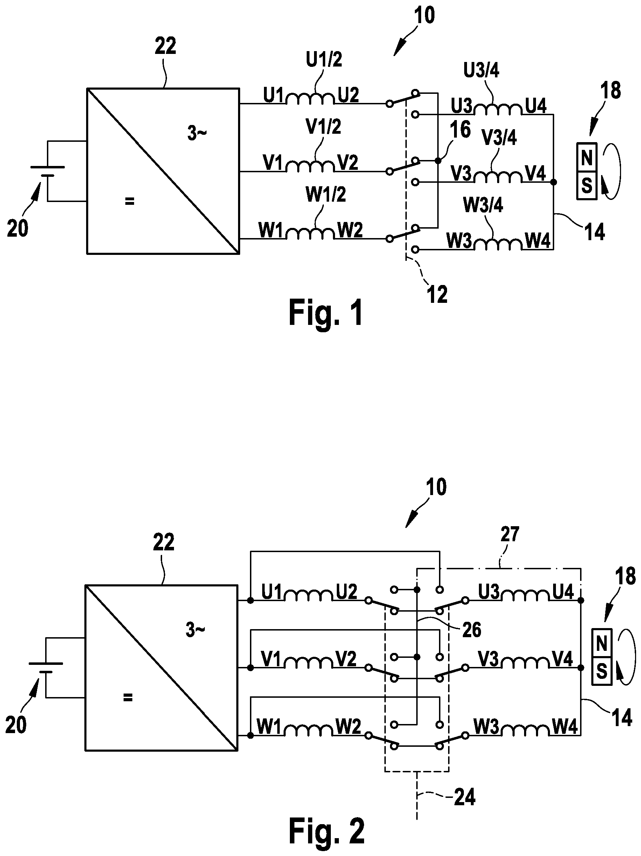

In der Figur 1 ist die prinzipielle Schaltungsanordnung einer elektrischen Maschine nach dem Stand der Technik in einer Ausführung als dreiphasiger, elektronisch kommutierter und permanentmagnetisch erregter Motor dargestellt, wie er beispielsweise als Antriebsmotor für Elektrowerkzeuge eingesetzt werden kann. Vom Stator 10 des Motors ist hierbei nur die dreiphasige Wicklung dargestellt, wobei die einzelnen Stränge in Teilspulen U1/2 und U3/4, V1/2 und V3/4 sowie W1/2 und W3/4 unterteilt sind. Entsprechend sind die Enden der Teilspulen mit U1-U4, V1-V4 und W1-W4 bezeichnet. Zwischen den Teilspulen der Phasen U,V,W befindet sich eine dreipolige Schaltvorrichtung 12, durch weiche die Teilspulen der einzelnen Phasen wahlweise in Reihe geschaltet werden mit einem Sternpunkt 14 oder alternativ die Teilspulen U3/4, V3/4 und W3/4 abgetrennt und die Teilspulen U1/2, V1/2 und W1/2 zu einem neuen Sternpunkt 16 verschaltet werden.

Der permanentmagnetische, schematisch dargestellte Rotor der Maschine ist mit 18 bezeichnet und in der Praxis zweipolig, vierpolig oder entsprechend einem Vielfachen dieser Polzahlen ausgebildet und in bekannter Weise gestaltet, wobei sich am Rotorumfang jeweils Nord- und Südpole abwechseln. Diese Nord- und Südpole könne entweder direkt durch am Umfang des Rotors 18 angeordnete Permanentmagnete oder durch dort vorhandenes Rotoreisen gebildet werden.

Die Speisung der Maschine erfolgt aus einer Gleichspannungsquelle 20 über einen Umrichter 22, in dem der Gleichstrom in eine dreiphasige Wechselspannung umgeformt wird. Der Umrichter 22 ist vorzugsweise als transistorisierte Vollbrückenschaltung gestaltet, wobei die einzelnen Transistoren durch eine nicht dargestellte Steuerung entsprechend der Rotorposition in ebenfalls allgemein bekannter Weise eingeschaltet werden.

Die Schaltungsanordnungen der elektrischen Maschine gemäß der Figuren 2, 3 und 4 sind grundsätzlich gleich aufgebaut wie die Anordnung gemäß Figur 1, wobei gleiche Teile mit gleichen Bezugszeichen versehen sind. Unterschiede bestehen hinsichtlich der Art der Umschaltung der einzelnen Teilspulen und deren Anschluss an den Umrichter 22.

In Figur 2 erfolgt die Umschaltung durch eine sechspolige Schaltvorrichtung 24. Diese Umschaltung ist bereits aus dem Stand der Technik bekannt. Dabei ist jeweils ein Umschaltkontakt dauernd mit den Anschlüssen U2 und U3, V2 und V3 sowie W2 und W3 verbunden. Die schaltbaren Kontakte der Schaltvorrichtung 24 verbinden entweder die Anschlüsse U2 und U3, V2 und V3 sowie W2 und W3 oder sie bilden aus den Anschlüssen U2,V2 und W2 einen neuen Sternpunkt 26 und verbinden gleichzeitig die Anschlüsse U3, V3 und W3 jeweils mit den Anschlüssen U1, V1 und Wl, so dass die Teilspulen U3/4, V3/4 und W3/4 parallel geschaltet sind zu den Teilspulen U1/2, V1/2 und W1/2. Die Sternpunkte 14 und 26 werden entsprechen der strichpunktierten Linie 27 miteinander verbunden.

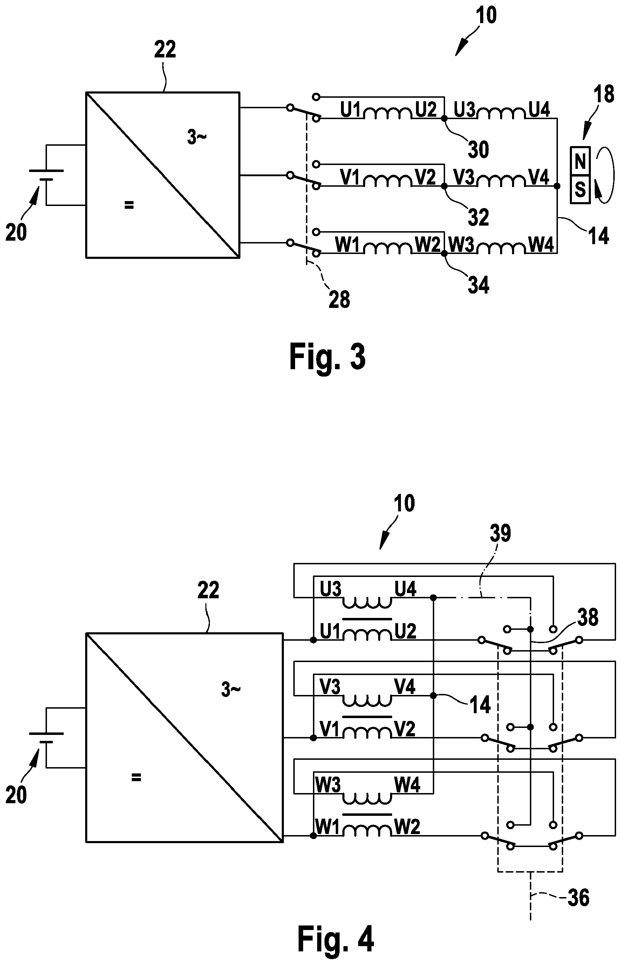

Bei der ebenfalls aus dem Stand der Technik bekannten Schaltungsanordnung gemäß Figur 3 liegt am Ausgang des Umrichters 22 eine dreipolig Schaltvorrichtung 28, welche in der in der Zeichnung dargestellten Stellung die in Reihe geschalteten Teilspulen U1/2 und U3/4, V1/2 und V3/4 sowie W1/2 und W3/4 als Reihenschaltung mit dem Sternpunkt 14 mit dem Umrichter 22 verbindet. Zwischen den Teilspulenanschlüssen U2/3, V2/3 und W2/3 sind hierbei Anzapfungen 30, 32 und 34 herausgeführt und mit den in der Zeichnung freien Anschlüssen der Schaltvorrichtung 28 verbunden, so dass bei deren Umschaltung die Teilspulen U1/2, V1/2 und W1/2 von der Spannungsversorgung abgetrennt werden und nur die Teilspulen U3/4, V3/4 und W3/4 mit dem Sternpunkt 14 mit entsprechend ihren Teilwindungszahlen reduzierten Teilspulen die Statorwicklung 10 im Feldschwächbetrieb bilden. Anders als bei der Abschaltung gemäß Figur 1 wird hierbei der Sternpunkt 14 der Teilspulen nicht verschoben und es muss jeweils nur eine Anzapfung zwischen den Teilspulen angebracht werden.

Figur 4 zeigt eine Schaltungsanordnung der elektrischen Maschine, bei der erfindungsgemäß die Teilspulen U1/2 und U3/4, die Teilspulen V1/2 und V3/4 sowie die Teilspulen W1/2 und W3/4 von parallel gewickelten Drähten gebildet werden, welche jeweils in der gleichen Nut liegen. Die Spulenanfänge U1, V1 und W1 sind hierbei direkt mit den Ausgängen des Umrichters 22 verbunden , während die zugehörigen Ausgänge U2, V2 und W2 mit einem Festkontakt einer sechspoligen Schaltvorrichtung 36 verbunden sind. Durch diese Schaltvorrichtung 36 werden die Spulen U1/2, V1/2 und W1/2 wahlweise in Reihe zu den Spulen U3/4, V3/4 und W3/4 oder zu einem weiteren Sternpunkt 38 verschaltet, während die Teilspulenausgänge U4, V4 und W4 den Sternpunkt 14 bilden. Die Sternpunkte 14 und 38 sind entsprechend der strichpunktierten Linie 39 verbunden. So kann die Maschine wiederum wahlweise in einem spannungsgesteuerten Betrieb mit niedrigeren Drehzahlen bei Reihenschaltung der Teilspulen oder andererseits durch Feldschwächung in einem höheren Drehzahlbereich bei Parallelschaltung der Teilspulen betrieben werden. Die Induktivität und der ohmsche Widerstand bei der Reihenschaltung nehmen bei gleichen Drahtquerschnitten und gleichen Teilspulen jeweils den vierfachen Wert an, die Drehzahl ist nur halb so groß wie bei der Parallelschaltung der Teilspulen. Gleichzeitig reduziert sich bei der Reihenschaltung der maximale Kurzschlussstrom auf ein Viertel des Wertes, wobei die Gesamtcharakteristik des Motors entsprechend den unterschiedlichen Induktivitäten und ohmschen Widerständen verändert wird. Eine Abschaltung von parallelen Teilspulen ist nicht sinnvoll, da sie zu keiner Änderung der Drehzahl führt.

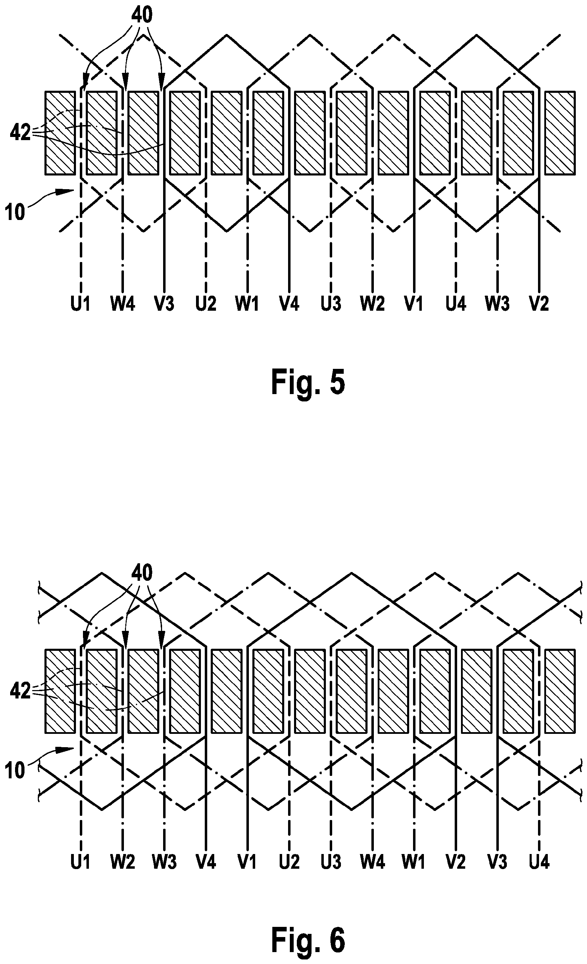

Die Figuren 5 bis 8 zeigen verschiedene erfindungsgemäße Wicklungsanordnungen für die Teilspulen einer dreiphasigen Statorwicklung entsprechend der Schaltungsanordnung von Figur 4. Hierbei sind die Spulenanfänge und die Spulenenden jeweils herausgeführt und mit den gleichen Bezeichnungen versehen wie in den Figuren 1 bis 4, so dass auf zusätzliche Darstellungen der Wicklungsverbindungen untereinander verzichtet werden kann. Diese entsprechen jeweils den Verschaltungen der Figuren 1 bis 4 und können von dort abgeleitet werden.

In Figur 5 ist die Abwicklung eines Stators 10 einer vierpoligen Maschine mit zwölf Nuten 40 dargestellt. In jeder Nut 40 liegt nur eine Spulenseite 42 der als Schleifenwicklung ausgebildeten Teilspulen U1/2, U3/4, V1/2, V3/4, W1/2 und W3/4. Bei einer Verschaltung gemäß Figur 1 sind dann die Spulenanfänge U1, V1 und W1 an den Umrichter 22 angeschlossen. Die Spulenausgänge U2, V2 und W2 sind über die dreipolige Schaltvorrichtung 12 zum neuen Sternpunkt 16 verbunden und die Teilspulen U3/4, V3/4 und W3/4 mit dem Sternpunkt 14 von der Spannungsversorgung abgetrennt. Nach einer Umschaltung der dreipoligen Schaltvorrichtung 12 werden die Spulenenden U2 und U3, V2 und V3 sowie W2 und W3 zu einer Reihenschaltung der Teilspulen mit dem Sternpunkt 14 an den Spulenenden U4, V4 und W4 verbunden.

Bei einer Verschaltung der Teilspulen aus Figur 5 gemäß der Anordnung in Figur 2 ergibt sich durch die sechspolige Schaltvorrichtung 24 zusätzlich die Möglichkeit, jeweils die Teilspulen U1/2 und U3/4, V1/2 und V3/4 sowie W1/2 und W3/4 parallel zu schalten. Die dargestellte Schaltungsvariante der Figur 2 entspricht der bereits anhand von Figur 1 geschilderten Reihenschaltung der Teilspulen. Für die Parallelschaltung der Teilspulen ist das Umschalten der sechspoligen Schaltvorrichtung 24 erforderlich, wodurch einerseits der neue Sternpunkt 26 gebildet wird und andererseits die Spulenanfänge U3, V3 und W3 mit den Ausgängen des Umrichters 22 verbunden werden.

Eine weitere Möglichkeit zur Verschaltung der Teilspulen aus Figur 5 zeigt Figur 3 mit einer dreipoligen Schaltvorrichtung 28 unmittelbar am Ausgang des Umrichters 22, welche entweder die Anschlüsse U1, V1 und W1 und die nachgeordneten Teilspulen zu einer Reihenschaltung mit dem Sternpunkt 14 verbindet oder wahlweise nach dem Umschalten die Teilspulen U1/2, V1/2 und W1/2 von der Spannungsversorgung abtrennt und mit den Teilspulen U3/4, V3/4 und W3/4 die neue reduzierte Teilwicklung für den Feldschwächebetrieb im Stator 10 bildet. Hierbei sind die Anschlüsse der Teilspulen verschoben, der Sternpunkt 14 bleibt jedoch erhalten.

Figur 6 zeigt wiederum einen Stator 10 mit 12 Nuten, wobei ebenfalls in jeder Nut 40 eine Spulenseite 42 liegt. Die Wicklung ist hierbei jedoch für eine zweipolige Ausführung des Rotors 18 gestaltet, wodurch sich eine Lochzahl von 2 ergibt. Hierbei liegen jeweils zwei Spulenseiten 42 von Teilspulen der gleichen Phase in benachbarten Nuten 40. Die Wicklung ist ebenfalls als Schleifenwicklung ausgeführt. Abweichend von den Wicklungsbezeichnungen in den Figuren 1 bis 3 sind jedoch bei einem zweipoligen Rotor die Teilwicklungen U3/4, V3/4 und W3/4 um 180°el zu verschieben, so dass sich die Reihenschaltung bei den Anschlüssen U4, V4 und W4 und andererseits der Sternpunkt 14 bei den Anschlüssen U3, V3 und W3 ergibt. Entsprechend sind bei einer Parallelschaltung gemäß Figur 2 die Teilwicklungsanschlüsse U4, V4 und W4 mit den entsprechenden Ausgängen des Umrichters 22 verbunden, während die Anschlüsse U3, V3 und W3 den Sternpunkt 14 bilden. Bei der Abschaltung der Spulengruppe mit den Teilspulen U3/4, V3/4 und W3/4 ergibt sich als Besonderheit, dass nach dem Abschalten der Spulengruppe eine Wicklungsanordnung mit verkürzten Spulen mit einer Spulenweite von 150°el entsteht. Selbstverständlich kann auch hierbei entsprechend Figur 3 die Spulengruppe mit den Teilspulen U1/2, V1/2 und W1/2 abgeschaltet werden, so dass sich der Sternpunkt 14 beim Abschalten einer Spulengruppe nicht verschiebt.

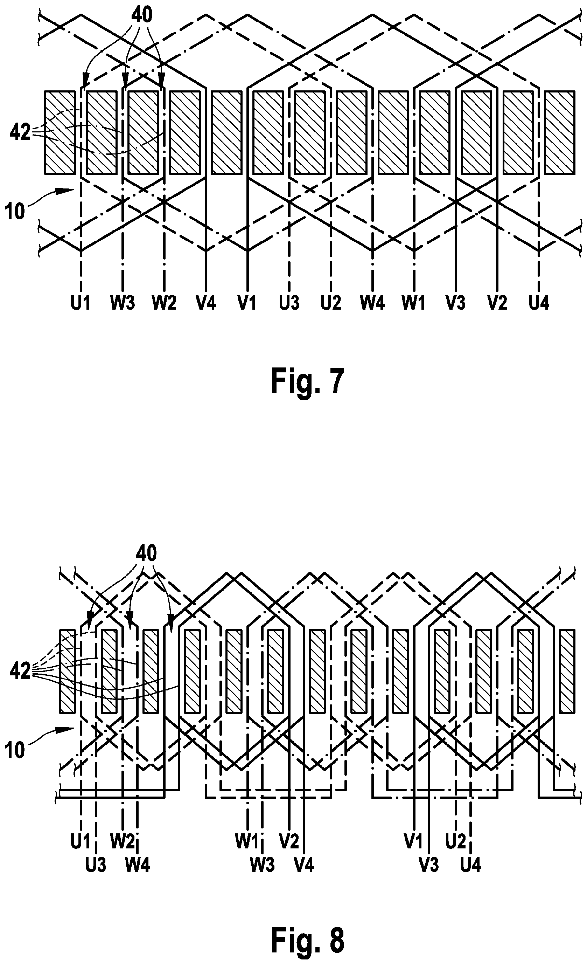

Figur 7 zeigt eine dreiphasige Wicklung für einen Stator 10 bei zweipoliger Ausführung des Rotors 18, wobei jedoch die Teilspulen mit einer Spulenweite von 180°el ausgeführt sind. Bei dieser Anordnung ergibt sich auch nach Abschaltung einer Spulengruppe eine Wicklung mit Durchmesserspulen, wobei jedoch im Vergleich zu der Wicklungsanordnung gemäß Figur 6 längere Wickelköpfe entstehen, welche eine größere Drahtlänge mit mehr Kupfer und einem höheren Platzbedarf im Stator erfordern. Im Übrigen gelten die Ausführungen zu Figur 6 entsprechend auch bei Figur 7.

Figur 8 zeigt eine Wicklungsgestaltung für einen vierpolig aufgebauten Rotor 18 mit einem Stator 10 mit 12 Nuten 40, wobei in jeder Nut 40 zwei parallele Drähte, beziehungsweise parallele Spulenseiten 42 liegen. Eine derartige Anordnung entspricht der schaltungsmäßigen Darstellung in Figur 4 mit einer engen magnetischen Kopplung der jeweiligen Teilspulen jeder Phase. Die Wicklungsanfänge U1 und U3, V1 und V3 sowie W1 und W3 liegen ebenso wie die zugehörigen Spulenenden in der gleichen Nut, die einzelnen Teilspulen sind am Statorumfang gleichmäßig verteilt angeordnet. Schaltungsmäßig bietet sich hierbei gemäß Figur 4 wiederum wahlweise die Reihenschaltung für den niedrigeren Drehzahlbereich und die Parallelschaltung für den Feldschwächebetrieb im höheren Drehzahlbereich an, während bei einer Abschaltung von einem Spulenteil sich gegenüber der Reihenschaltung keine Veränderung der Windungszahl und demzufolge auch keine Drehzahlveränderung ergibt sondern nur höhere Verluste in der Maschine.

Die erfindungsgemäße Gestaltung der elektrischen Maschine erlaubt mit einfachen Mitteln ohne zusätzliche Verluste den Betrieb mit einer deutlich erhöhten Leerlaufdrehzahl an einer konstanten und fest vorgegebenen Spannungsquelle. Im Gegensatz zu herkömmlichen Anordnungen mit einer feldschwächenden Stator-Stromkomponente in der d-Achse des Rotors 18 vermindert die vorgeschlagene Anordnung den Wirkungsgrad der Maschine nicht, wobei die Drehzahlveränderung wahlweise durch Umschalten oder Abschalten von Spulengruppen erzielt werden kann. Die Anordnung kann mit besonderem Vorteil eingesetzt werden bei akkubetriebenen Motoren, beispielsweise bei akkubetriebenen Elektrowerkzeugen, wodurch dort sonst übliche mechanische Umschaltgetriebe eingespart werden. Die Maschine kann hierdurch kompakter, leichter und preiswerter ausgeführt werden, wobei sich als Schaltelemente für die Schaltvorrichtungen 12, 24, 28 und 36 sämtliche bekannten Schaltelemente eignen, also sowohl mechanische Schalter oder Relais wie auch elektronische Schaltelemente. Die Betätigung der Schaltvorrichtungen kann entweder direkt durch den Benutzer erfolgen oder durch eine elektronische Baugruppe, beispielsweise einen Mikroprozessor. Die Schaltvorrichtung kann weiterhin entweder als eigenständiger Umschalter ausgeführt werden ähnlich den sonst üblichen mechanischen Getriebeumschaltungen oder sie kann konstruktiv in den gleichzeitig als Drehzahlgeber wirkenden Werkzeugschalter integriert werden, so dass die Umschaltung automatisch mitbetätigt wird, wenn hohe Drehzahlen durch den Benutzer angefordert werden. Weiterhin ist auch eine selbsttätige Umschaltung in Abhängigkeit vom Lastmoment möglich.

Eine weitere vorteilhafte Verwendungsmöglichkeit der vorgeschlagenen Maschinengestaltung liegt im Automobilbereich auf dem Gebiet der Startergeneratoren, für welche sich die Bauform als elektronisch kommutierte Maschine ebenfalls sehr gut eignet und der große zur Verfügung stehende Drehzahlbereich genutzt werden kann. Wegen der hierbei auftretenden hohen Drehzahlen eignen sich dabei Rotorbauformen mit höherer Polzahl, beispielsweise 12polige oder 16polige Anordnungen. Entsprechendes gilt für die Anzahl der Statorphasen. Während eine dreiphasige Ausführung grundsätzlich einen einfachen und preiswerten Aufbau der Maschine ermöglicht, bieten höherphasige Statorwicklungen Vorteile hinsichtlich der magnetischen Geräusche und der Luftspaltgeräusche, welche insbesondere bei Dauerbetrieb im Kraftfahrzeug störend sind. Im Vordergrund steht bei jeder Anwendung jedoch die Möglichkeit zur Bereitstellung hoher Lastmomente bei entsprechend reduzierter Drehzahl, beziehungsweise die Verfügbarkeit hoher Drehzahlen, wenn das erforderliche Lastmoment dies zulässt.

Abschließend wird noch darauf hingewiesen, dass auch das Abschalten von Wicklungsteilen gute Ergebnisse hinsichtlich des Wirkungsgrades der Maschine erbringt. Dieses zunächst überraschende Ergebnis ergibt sich daraus, dass aufgrund der durch die Abschaltung von Wicklungsteilen entstehenden Unsymmetrien im magnetischen Kreis der Maschine in deren Luftspalt höhere Oberwellenanteile auftreten, wodurch sich die Induktivität, insbesondere im oberen Drehzahlbereich, deutlich erhöht und mit ihr der Wirkungsgrad der Maschine.

## Patentansprüche

1. Elektrische Maschine, insbesondere Antriebsmotor für ein Elektrowerkzeug oder Startergenerator für ein Kraftfahrzeug, mit einem permanentmagnetisch erregten Rotor (18) und einem eine mehrphasige Statorwicklung tragenden Stator (10), welche einerseits in einem spannungsgesteuerten, niedrigeren Drehzahlbereich über einen Umrichter (22) an einer Gleichspannungsquelle (20) und andererseits durch Feldschwächung in einem höheren Drehzahlbereich betreibbar ist, wobei zur Feldsschwächung die Struktur der Maschine veränderbar ist im Sinne einer Reduzierung der Flussverkettung zwischen dem Rotor (18) und dem Stator (10), **dadurch gekennzeichnet, dass** zumindest Teile (U1/2, V1/2, W1/2; U3/4, V3/4, W3/4) der Statorwicklung mit parallelen Drähten (42) ausgeführt sind, welche jeweils in einer gleichen Nut des Stators (10) liegen und zwischen einer Reihenschaltung für den spannungsgesteuerten Betrieb und einer Parallelschaltung für den Feldschwächbetrieb umschaltbar sind.

2. Elektrische Maschine nach Anspruch 1, **dadurch gekennzeichnet, dass** die Statorwicklung in jeder Phase (U, V, W) zwei Teilspulen (U1/2, U3/4; V1/2, V3/4; W1/2, W3/4) aufweist, welche umschaltbar oder abschaltbar sind.

3. Elektrische Maschine nach einem der vorhergehenden Ansprüche, **dadurch gekennzeichnet, dass** die Umschaltung von Wicklungsteilen durch wenigstens eine mehrpolige Schaltvorrichtung (12, 24, 28, 36) erfolgt.

4. Elektrische Maschine nach einem der vorhergehenden Ansprüche, **dadurch gekennzeichnet, dass** die Teilspulen (U1/2, V1/2, W1/2; U3/4, V3/4, W3/4) der Statorwicklung zu wenigstens einem neuen Sternpunkt (16, 26, 38) verschaltbar sind.

5. Elektrische Maschine nach einem der vorhergehenden Ansprüche, **dadurch gekennzeichnet, dass** die Statorwicklung zweiphasig bis sechsphasig ausgebildet ist.

6. Elektrische Maschine nach einem der vorhergehenden Ansprüche, **dadurch gekennzeichnet, dass** der Rotor (18) zweipolig, vierpolig oder mit einem Vielfachen dieser Polzahlen ausgeführt ist.

## Claims

1. Electric machine, in particular drive motor for a power tool or starter generator for a motor vehicle, having a permanent magnet rotor (18) and a stator (10) supporting a polyphase stator winding, which electric machine can be operated on the one hand in a voltage-controlled, lower rotational speed range by means of a converter (22) at a DC voltage source (20) and on the other hand in a higher rotational speed range by way of field weakening, wherein, for the purpose of field weakening, the structure of the machine can be changed in the sense of reducing the flux linkage between the rotor (18) and the stator (10), **characterized in that** at least parts (U1/2, V1/2, W1/2; U3/4, V3/4, W3/4) of the stator winding are embodied with parallel wires (42), which are each located in the same groove of the stator (10) and can be switched over between a series circuit for the voltage-controlled operation and a parallel circuit for the field-weakening operation.

2. Electric machine according to Claim 1, **characterized in that** the stator winding in each phase (U, V, W) has two partial coils (U1/2, U3/4; V1/2, V3/4; Wl/2, W3/4), which can be switched over or disconnected.

3. Electric machine according to either of the preceding claims, **characterized in that** winding parts are switched over by way of at least one multipole switching apparatus (12, 24, 28, 36).

4. Electric machine according to one of the preceding claims, **characterized in that** the partial coils (U1/2, V1/2, W1/2; U3/4, V3/4, W3/4) of the stator winding can be interconnected to form at least one new star point (16, 26, 38).

5. Electric machine according to one of the preceding claims, **characterized in that** the stator winding is of two-phase to six-phase form.

6. Electric machine according to one of the preceding claims, **characterized in that** the rotor (18) is embodied in a two-pole manner, four-pole manner or with a multiple of these pole numbers.

## Revendications

1. Machine électrique, en particulier moteur d'entraînement destiné à un outil électrique ou générateur-démarreur destiné à un véhicule automobile, comportant un rotor (18) excité par des aimants permanents et un stator (10) portant un enroulement de stator polyphasé, laquelle machine peut être mise en fonctionnement, d'une part à vitesse plus réduite, de manière commandée en tension, par l'intermédiaire d'un convertisseur (22), et d'autre part, dans une plage de régime plus élevée commandée en tension sur une source de tension continue (20), dans lequel, pour l'affaiblissement de champ, la structure de la machine peut être modifiée dans le sens d'une réduction de l'enchaînement de flux entre le rotor (18) et le stator (10),
**caractérisé en ce qu'**au moins certaines parties (U1/2, V1/2, W1/2 ; U3/4, V3/4, W3/4) de l'enroulement de stator sont réalisées avec des fils parallèles (42) qui sont respectivement situés dans une même gorge du stator (10) et peuvent être amenées à basculer entre un circuit série pour le fonctionnement commandé en tension et un circuit parallèle pour le fonctionnement avec affaiblissement de champ.

2. Machine électrique selon la revendication 1,
**caractérisée en ce que** l'enroulement de stator comporte dans chaque phase (U, V, W) deux bobines partielles (U1/2, U3/4 ; V1/2, V3/4 ; W1/2, W3/4) qui peuvent être commutées ou désactivées.

3. Machine électrique selon l'une des revendications précédentes, **caractérisée en ce que** la commutation de parties d'enroulement est effectuée par au moins un dispositif de commutation multipolaire (12, 24, 28, 36).

4. Machine électrique selon l'une des revendications précédentes, **caractérisée en ce que** les bobines partielles (U1/2, V1/2, W1/2 ; U3/4, V3/4, W3/4) de l'enroulement de stator peuvent être reliées à au moins un nouveau point neutre (16, 26, 38).

5. Machine électrique selon l'une des revendications précédentes, **caractérisée en ce que** l'enroulement de stator est réalisé de manière à présenter deux à six phases.

6. Machine électrique selon l'une des revendications précédentes, **caractérisée en ce que** le rotor (18) est réalisé de manière à présenter deux pôles, quatre pôles ou un multiple de ces nombres de pôles.
